# EUROPEAN PATENT SPECIFICATION

(11) **EP 2 388 161 B1**
(45) Date of publication and mention of the grant of the patent: **09.10.2013**
(21) Application number: 10425163.2
(22) Date of filing: 18.05.2010
(51) Int. Cl.: B60N 2/24, B60N 3/02

(54) **ACCESS AIDING DEVICE FOR THE CABIN OF A VEHICLE, ESPECIALLY AN INDUSTRIAL OR COMMERCIAL OR SPECIALTY VEHICLE**
EINSTIEGSHILFEVORRICHTUNG FÜR DIE KABINE EINES FAHRZEUGS, INSBESONDERE EIN INDUSTRIELLES ODER KOMMERZIELLES ODER SPEZIALFAHRZEUG
AIDE À L'ACCES POUR LA CABINE D'UN VEHICULE, EN PARTICULIER UN VEHICULE INDUSTRIEL OU COMMERCIAL OU SPECIALISE

(43) Date of publication of application: 23.11.2011
(73) Proprietor: Frizzarin, Ernesto, 10025 Pino Torinese (IT)
(72) Inventor: Frizzarin, Ernesto, 10025 Pino Torinese (IT)
(74) Representative: Borsano, Corrado

(56) References cited:
- DE-A1-102009 035 768
- GB-A- 939 110
- US-A- 4 023 827

## Description

### Application field of the invention

The present invention relates to an access aiding device for the cabin of a vehicle, especially an industrial or commercial or specialty vehicle, in order to help people get on and get off the vehicle.

### Description of the prior art

It is not rare that people, and especially the driver, get in or out the cabin of a vehicle with difficulty.

In particular, in a vehicle with big dimensions the seat is placed very high, and the driver can only use high steps to reach it, and/or handles in fixed positions in the cabin, which may be or become difficult to use. The situation may also worsen over the passing of the time, when the person is tired, or walks with difficulty or is overweight. DE102009035768 A1 shows an access aiding system, described in the preamble of the claim 1.

### Summary of the invention

Therefore the aim of the present invention is to overcome all the drawbacks mentioned above and to provide an access aiding device for the cabin of a vehicle, especially an industrial or commercial or specialty vehicle, in order to help people get on and get off the vehicle.

The object of the present invention is an access aiding device for the cabin of a vehicle, especially an industrial or commercial or specialty vehicle, according to claim 1.

In particular the object of the present invention is an access aiding device for the cabin of a vehicle, especially an industrial or commercial or specialty vehicle, as described more fully in the claims, which are an integral part of this disclosure.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 shows a side view of a portion of a cabin of an industrial vehicle wherein the device that is object of the present invention is present;
figure 2 shows a side view of the vehicle's cabin with the device that is object of the invention;
figure 3 shows a handle that is part of the device that is object of the invention;
figure 4 shows an example of system for moving the handle that is part of the device that is object of the invention.

In the drawings the same reference numbers and letters identify the same elements or components.

### Detailed description of preferred embodiments of the invention

With reference to the figures, the device according to the invention substantially comprises a handle 1 suitable to be grabbed by a person, and a system inside the cabin for moving the handle, in order to facilitate the access of the person when getting on and off the vehicle's cabin.

The system for moving the handle comprises a rope 2 and a winch 3. The rope is connected to the handle at one side and to the winch at the other side.

The handle 1 is preferably of the ergonomic type, suitable to be grabbed with one or two hands, having a shape fitting the fingers in order to facilitate its hold.

The handle includes an electronic system 4 in order to transmit pulses to the control device, not shown in the figures, of a type known in the art, together with control button/switches.

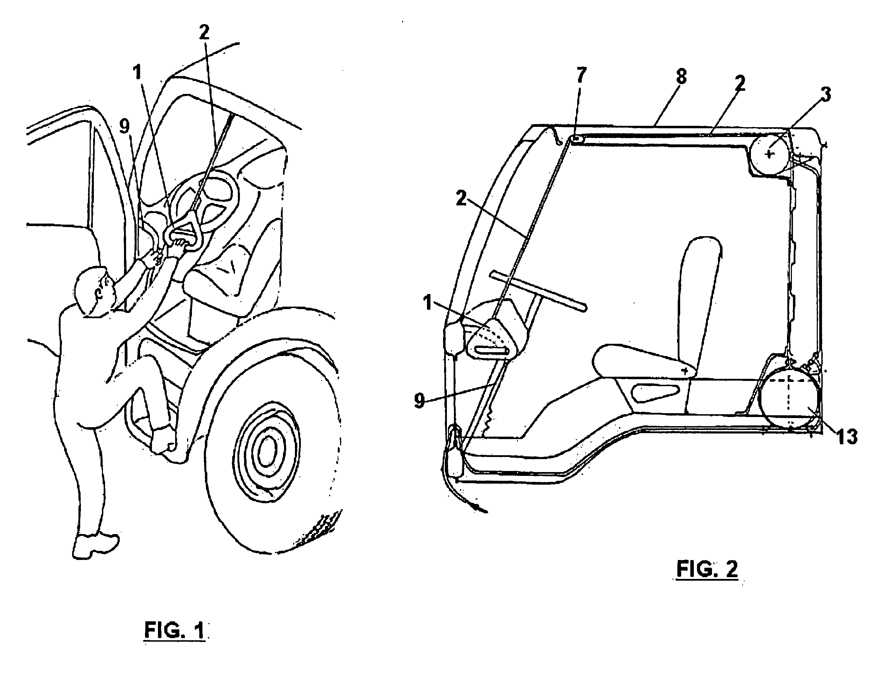

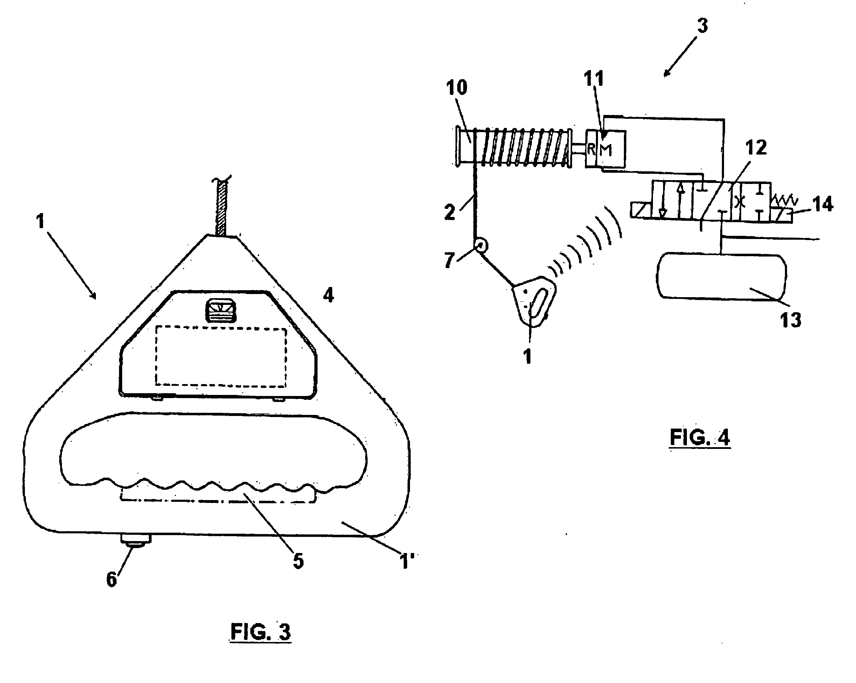

A first control switch 5 is included in the part of the handle that is suitable to be grabbed. It has the function to detect the presence of the hand which grabs the handle. For this function the switch comprises for example a capacitive sensor, which advantageously detects the presence of the hand without moving parts; as an alternative it is possible to use a mechanical switch, for example button switch, with a moving part at the side where the fingers of the hand(s) grab the handle. For example in figure 3 this is the higher portion of the part of handle 1' suitable to be grabbed in the way shown in figure 1.

In the lower part of the handle, usually reached by the thumb, a second switch 6 is present of the normal type, electrically connected in series to the first one. The activation of the device depends on the closing of both switches. The purpose is to guarantee the safety of the user, by avoiding the accidental activation of the system.

When both switches are closed, the transmitter inside the handle sends a permission signal to the device controlling the activation of the winch. For safety reasons, one released switch is enough to bring the system to the safety status, wherein it stops and moves the handle to the upper rest position.

The transmission system may be of any type known in the art, for example with a battery embedded into the handle, or with a transponder, with or without remote control.

The system for moving the handle comprises at least an intermediate transmission element 7, for example a pulley, for the rope 2 slide, placed in an elevated point within the cabin, for example suspending from the middle of the roof panel 8 of the cabin. The position of the transmission element has to be such that it guarantees the correct angle of intervention of the rope connected to the handle, so that it can follow the natural movement of the person when getting on or off the cabin. The trajectory of the handle has to be the same as the one of the person grabbing it, with the correct position, namely in the middle of the access steps, in order to facilitate the access between the seat and the steering wheel, therefore avoiding not ergonomic movements of the joints.

The handle has two rest positions in the system, one at the most elevated point in the cabin (in fact it is the transmission point 7), the other is at a point in the lower area of the opened side door, easy to reach for the person, for example in correspondence of a fixed handle 9 near the hinges of the side door. In the most elevated point the position of the handle must not hinder the visibility, therefore it can be hooked and/or retracted to the roof panel.

In the lower point a hold hook to retain the handle.

In addition a button may be present in the lower area, which allows the person to activate the control device to lower the handle, in case the person got off the cabin without using the handle, which is therefore in the upper rest point, but he/she needs it to get on.

Moreover, also end of stroke switches which detect the end of stroke points are present in order to determine which will be the following step: winding by pulling or releasing by braking.

The winch 3 has to transmit to the handle 1 a pulling force when the person gets on and a braking force when the person gets off. The winch includes a windlass 10, on which the rope 2 winds, which is connected to a motor, for example a pneumatic ratiomotor 11. In a direction of rotation the latter functions as an motor, by pulling the winding rope, and therefore by helping the person who is getting on the cabin; while in the opposite direction of rotation it functions as a brake, in order to help the person while getting off the cabin. A dual input slide valve gear 12 allows to switch between the two operating modes.

The slide valve gear 12, of a type known in the art, in normal position is at rest, and its inputs are disconnected and separated from the source of pneumatic energy 13. When the actuator coil 14 is excited in order to facilitate the climbing on the cabin, one of the inputs is connected to the source of pneumatic energy 13, while the other is released. On the contrary, in the descending step, a second coil of the slide valve gear is excited and puts one of the inputs into contact with the surrounding environment, while the other is released by means of a calibrated hole, with pneumatic resistance, which determines the magnitude of the braking capacity while descending. In this situation the ratiomotor functions as a brake in order to facilitate the descending step of the person in the cabin.

The source of pneumatic energy may be a reservoir connected to the vehicle system of the pneumatic services, which may be controlled by a valve which determines its filling. The connection to the pneumatic services is realized by means of a pipeline 14 connecting to a electropneumatic interface plate of the cabin. Said reservoir may also be installed in an appropriate space in the cabin or on the chassis. The capacity of the tank is determined by means of an estimate of the expected number of actuations of the system.

It is also possible to use an air receiver already present on the vehicle for other purposes.

The motor may also be of the electric type, power supplied, for example, by vehicle batteries. In this case neither the air receiver nor the slide valve gear are necessary.

The presence of the intermediate transmission 7 allows to place the ratiomotor unit (which, anyway, is bigger than the transmission) in the cabin in a direction that not necessarily is the same as the pulling direction of the rope, but in the position that is most suitable to minimize the space it occupies in the cabin, being at the same time structurally solid, for example in correspondence of the box-type cross member between the roof panel and the rear wall, as in figure 2. This area is typically present in all the cabins, and therefore the application on different cabins (of different manufacturers or having different length) implies only a different initial winding of the rope on the windlass. Also the intermediate transmission 7 is preferably placed in correspondence of an already existing reinforcement point of the cabin, for example on the upper cross member of the cabin, in the roof panel, where reinforcement stapes are present.

The rope may be made of interwoven steel wires.

From the description set forth above it will be possible for the person skilled in the art to embody the invention with no need of describing further construction details.

## Claims

1. Access aiding device for the cabin of a vehicle, especially an industrial or commercial or specialty vehicle, comprising a handle (1) suitable to be grabbed by a person, and a system inside the cabin for moving the handle, said moving handle system comprising a rope (2) and a winch (3), the rope being connected to the handle by one side, and to the winch by the other side, the moving handle system being **characterized in that** it transmits to the handle (1) a pulling force when the person gets on.

2. Device according to claim 1, wherein said moving handle system is also able to transmit to the handle (1) a braking force when the person gets off.

3. Device according to claims 1 or 2, wherein said handle (1) comprises two switches electrically connected in series, a first switch (5) suitable to detect the presence of at least one hand of the person, and a second switch (6) suitable to be operated by the person, the activation of the aiding device being determined by the activation of both switches, the deactivation of the aiding device being determined by the release of at least one of said switches.

4. Device according to claims 1 or 2, wherein said system for moving the handle comprises at least an intermediate transmission element (7), for sliding the rope (2), placed in an elevated place inside the cabin, the position of the transmission element being such that it guarantees the correct pulling angle of the rope connected to the handle.

5. Device according to claim 4, wherein said handle (1) comprises an electronic system (4) suitable to transmit impulses to a control device, in order to determine the movement of the handle between two rest positions upper and lower.

6. Device according to claim 5, wherein said upper rest position is in correspondence of said intermediate transmission element (7), and said lower rest position is in correspondence of a point (9) in the opening area of the side door of the cabin.

7. Device according to claim 1, wherein said winch (3) comprises a windlass (10) on which the rope winds, and an activation motor of said windlass, said motor being **characterized by** two directions of rotation, in one direction pulling the rope winding of said windlass, in the other direction functioning as a brake in the unwinding of the rope.

8. Device according to claim 7, wherein said motor is a pneumatic ratiomotor (11), the switching between said two directions of rotation being realized by means of a slide valve gear (12) connected to a source of pneumatic energy (13).

9. Device according to claim 7, wherein said motor is an electric motor.

10. Device according to claim 4, wherein said elevated point inside the cabin is in the middle of the roof panel of the cabin, preferably placed in correspondence of a reinforcement point of the cabin.

## Patentansprüche

1. Einstiegshilfevorrichtung für die Kabine eines Fahrzeugs, insbesondere ein industrielles oder kommerzielles oder Spezialfahrzeug, die einen Griff (1), der geeignet ist, von einer Person gegriffen zu werden, und ein System innerhalb der Kabine zum Bewegen des Griffs aufweist, wobei das Griffbewegungssystem ein Seil (2) und eine Winde (3) aufweist, wobei das Seil an einer Seite mit dem Griff verbunden ist, und an der anderen Seite mit der Winde, wobei das Griffbewegungssystem **dadurch gekennzeichnet ist, dass** es eine Zugkraft zu dem Griff (1) überträgt, wenn die Person aufsteigt.

2. Vorrichtung nach Anspruch 1, wobei das Griffbewegungssystem auch geeignet ist, um zu dem Griff (1) eine Verzögerungskraft zu übertragen, wenn die Person aussteigt.

3. Vorrichtung nach Anspruch 1 oder 2, wobei der Griff (1) zwei Schalter aufweist, die elektrisch in Reihe geschalten sind, wobei ein erster Schalter (5) geeignet ist, um das Vorhandensein von mindestens einer Hand von der Person zu detektieren, und ein zweiter Schalter (6) geeignet ist, um von der Person bedient zu werden, wobei die Aktivierung der Hilfsvorrichtung durch die Aktivierung von beiden Schaltern bestimmt wird, wobei die Deaktivierung der Hilfsvorrichtung durch das Loslassen von mindestens einem der Schalter bestimmt wird.

4. Vorrichtung nach Anspruch 1 oder 2, wobei das System zum Bewegen des Griffs mindestens ein Zwischenübertragungselement (7) aufweist, zum Gleiten des Seils (2), das in einer erhöhten Stelle innerhalb der Kabine angeordnet ist, wobei die Position des Übertragungselements so ist, dass sie den korrekten Zugwinkel des Seils, das mit dem Griff verbunden ist, garantiert.

5. Vorrichtung nach Anspruch 4, wobei der Griff (1) ein elektronisches System (4) aufweist, das geeignet ist, Impulse zu einem Steuergerät zu übertragen, um die Bewegung des Griffs zwischen zwei Ruhestellungen oberer und unterer zu bestimmen.

6. Vorrichtung nach Anspruch 5, wobei die obere Ruhestellung in Übereinstimmung mit dem Zwischenübertragungselement (7) ist, und die untere Ruhestellung in Übereinstimmung mit einem Punkt (9) in dem Öffnungsbereich von der Seitentür der Kabine ist.

7. Vorrichtung nach Anspruch 1, wobei die Winde (3) eine Haspel (10), auf der sich das Seil windet, und einen Aktivierungsmotor der Haspel aufweist, wobei der Motor durch zwei Rotationsrichtungen gekennzeichnet ist, in einer Richtung wird das Seil gezogen, das auf die Haspel aufgewickelt wird, in der anderen Richtung funktioniert sie als Bremse bei der Abwicklung des Seils.

8. Vorrichtung nach Anspruch 7, wobei der Motor ein pneumatischer Getriebemotor (11) ist, wobei die Schaltung zwischen den beiden Rotationsrichtungen durch eine Gleitventilsteuerung (12) realisiert wird, die mit einer Quelle von pneumatischer Energie (13) verbunden ist.

9. Vorrichtung nach Anspruch 7, wobei der Motor ein Elektromotor ist.

10. Vorrichtung nach Anspruch 4, wobei der erhöhte Punkt innerhalb der Kabine in der Mitte der Dachverkleidung der Kabine ist, vorzugsweise angeordnet in Übereinstimmung mit einem Verstärkungspunkt der Kabine.

## Revendications

1. Dispositif d'aide à l'accès pour la cabine d'un véhicule, en particulier d'un véhicule industriel ou commercial ou spécialisé, comprenant une poignée (1) appropriée pour être saisie par une personne, et un système à l'intérieur de la cabine pour déplacer la poignée, ledit système de poignée mobile comprenant un câble (2) et un treuil (3), le câble étant raccordé à la poignée par un côté, et au treuil par l'autre côté, le système de poignée mobile étant **caractérisé en ce qu'**il transmet à la poignée (1) une force de traction lorsque la personne monte.

2. Dispositif selon la revendication 1, dans lequel ledit système de poignée mobile est également capable de transmettre à la poignée (1) une force de freinage lorsque la personne descend.

3. Dispositif selon les revendications 1 ou 2, dans lequel ladite poignée (1) comprend deux commutateurs connectés électriquement en série, un premier commutateur (5) approprié pour détecter la présence d'au moins une main de la personne, et un second commutateur (6) approprié pour être actionné par la personne, l'activation du dispositif d'aide étant déterminée par l'activation des deux commutateurs, la désactivation du dispositif d'aide étant déterminée par la libération d'au moins un desdits commutateurs.

4. Dispositif selon les revendications 1 ou 2, dans lequel ledit système pour déplacer la poignée comprend au moins un élément de transmission intermédiaire (7), pour faire coulisser le câble (2), positionné dans un emplacement élevé à l'intérieur de la cabine, la position de l'élément de transmission étant telle qu'elle garantisse l'angle de traction correct du câble raccordé à la poignée.

5. Dispositif selon la revendication 4, dans lequel ladite poignée (1) comprend un système électronique (4) approprié pour transmettre des impulsions à un dispositif de commande, afin de déterminer le mouvement de la poignée entre deux positions de repos supérieure et inférieure.

6. Dispositif selon la revendication 5, dans lequel ladite position de repos supérieure correspond audit élément de transmission intermédiaire (7), et ladite position de repos inférieure correspond à un point (9) dans la zone d'ouverture de la portière latérale de la cabine.

7. Dispositif selon la revendication 1, dans lequel ledit treuil (3) comprend un guindeau (10) sur lequel le câble s'enroule, et un moteur d'activation dudit guindeau, ledit moteur étant **caractérisé par** deux directions de rotation, dans une direction tirant l'enroulement de câble dudit guindeau, dans l'autre direction servant de frein dans le déroulement du câble.

8. Dispositif selon la revendication 7, dans lequel ledit moteur est un moteur à rapport pneumatique (11), la permutation entre lesdites deux directions de rotation étant réalisée au moyen d'un engrenage de valve à tiroir (12) raccordé à une source d'énergie pneumatique (13).

9. Dispositif selon la revendication 7, dans lequel ledit moteur est un moteur électrique.

10. Dispositif selon la revendication 4, dans lequel ledit point élevé à l'intérieur de la cabine est au milieu du panneau de toit de la cabine, de préférence positionné pour correspondre à un point de renfort de la cabine.
